Europäisches Patentamt

European Patent Office

Office européen des brevets

(11) Veröffentlichungsnummer: **0 413 950 A1**

## (12) EUROPÄISCHE PATENTANMELDUNG

(21) Anmeldenummer: 90113536.8

(22) Anmeldetag: 14.07.90

(51) Int. Cl.5: **B60T 8/32**

(30) Priorität: 25.08.89 DE 3928110

(43) Veröffentlichungstag der Anmeldung:
27.02.91 Patentblatt 91/09

(84) Benannte Vertragsstaaten:
**DE FR GB IT SE**

(71) Anmelder: **ROBERT BOSCH GMBH**
**Postfach 10 60 50**
**D-7000 Stuttgart 10(DE)**

(72) Erfinder: **Maisch, Wolfgang, Dr. Dipl.-Ing.**

Elbinger Weg 4
D-7141 Schwieberdingen(DE)
Erfinder: **Steinhauser, Walter, Techn.**
Hermann-Essig-Strasse 106
D-7141 Schwieberdingen(DE)
Erfinder: **Käs, Günter, Ing.**
Markelsheimer Strasse 70
D-7000 Stuttgart 40(DE)
Erfinder: **Stegmaier, Alwin, Ing.**
100 Waverly Place Circle 2A
Charleston, SC 29418(US)

(54) **Druckerzeuger für eine hydraulische Fahrzeugbremsanlage.**

(57) Die Bremsanlage hat eine Einrichtung zur Antriebsschlupfbegrenzung mit einem Druckerzeuger 35. Dieser weist einen Zylinder 60 für die Aufnahme und den Ausstoß von Bremsflüssigkeit mittels eines Kolbens 50 auf. Der Zylinder 60 ist mit einem in Abhängigkeit von der Bewegung des Kolbens 50 betätigbaren Ventil 72 an einen Druckweg zwischen einem Hauptbremszylinder und einem Radbremszylinder angeschlossen.

Um einerseits eine kurze Baulänge und andererseits einen großen Hub des Druckerzeugers 35 zu erzielen, weist dieser folgende Merkmale auf:

Der Kolben 50 ist als Stangenkolben ausgebildet; er ist mit einem gleichachsig verlaufenden Hohlzylinder 40 verbunden, welcher den Kolben 50 und den Zylinder 60 übergreift; der Hohlzylinder 40 ist längsgeführt und außen mit einer zahnstangenförmigen Verzahnung 41 für den Angriff eines motorischen Antriebs 43 versehen.

FIG. 2

EP 0 413 950 A1

## DRUCKERZEUGER FÜR EINE HYDRAULISCHE FAHRZEUG-BREMSANLAGE

Stand der Technik

Die Erfindung geht aus von einem Druckerzeuger nach der Gattung des Hauptanspruchs. Es ist schon ein solcher Druckerzeuger aus der DE-PS 32 36 366 bekannt, bei dem der im Durchmesser verhältnismäßig große Zylinder den Kolben mit einer Rückstellfeder und ein im Kolben längsgeführtes Betätigungsglied für das Ventil mit Schließdruckfeder aufnimmt. Als Stellorgan für den Kolben ist gleichachsig zum Zylinder ein relativ großer Elektromagnet vorgesehen, dessen beweglicher Anker mit einem Stößel am Kolben zum Ausstoßen der Bremsflüssigkeit zum Radbremszylinder anzugreifen vermag. Die Rückförderung der Bremsflüssigkeit erfolgt dagegen durch die Wirkung der Rückstellfeder auf den Kolben.

Aufgrund dieser Ausgestaltung des Druckerzeugers sind bei kurzem Kolbenhub hohe Ankerkräfte erforderlich, damit eine ausreichend große Bremskraft für die Antriebsschlupfbegrenzung erzielt werden kann. Außerdem hat der Druckerzeuger eine relativ große Baulänge wegen der gleichachsigen Hintereinanderanordnung von Zylinder und Elektromagnet.

Vorteile der Erfindung

Der erfindungsgemäße Druckerzeuger mit den kennzeichnenden Merkmalen des Hauptanspruchs hat demgegenüber den Vorteil, daß der Druckerzeuger durch den über den Stangenkolben greifenden, mit einem rotatorischen Antrieb verbundenen Hohlzylinder einerseits eine kurze Baulänge haben kann, andererseits aber ein großer Hub erzielbar ist, mit dem der Bremsdruck im Radbremszylinder genau bemessen werden kann. Außerdem sind bei einem kleinen Kolbendurchmesser und großem Kolbenhub relativ niedrige Stellkräfte am Kolben erforderlich, um die notwendige Bremsarbeit zur Abbremsung eines unzulässig großen Schlupf aufweisenden Fahrzeugrades zu leisten.

Durch die in den Unteransprüchen aufgeführten Maßnahmen sind vorteilhafte Weiterbildungen und Verbesserungen des im Hauptanspruch angegebenen Druckerzeugers möglich.

Die im Anspruch 2 angegebene Maßnahme hat den Vorteil, daß sich Fluchtungs- und Winkelfehler zwischen dem Zylinder und dem Kolben, deren Befestigungspunkte relativ weit auseinanderliegen, ausgleichen können.

Durch die im Anspruch 3 gekennzeichneten Merkmale wird eine einfache und beanspruchungsgerechte Montageverbindung zwischen Kolben und Hohlzylinder offenbart.

Die im Anspruch 4 angegebene Maßnahme gibt eine zweckmäßige Lösung für eine Ventilbetätigung an bei durch großen Kolbenhub bedingtem, weit auseinanderliegenden Ventil- und Kolbenende. Dabei läßt die im Anspruch 5 gekennzeichnete Lösung den Durchmesser des mit dem Betätigungsglied zusammenwirkenden Kolbens unbeeinflußt.

Zeichnung

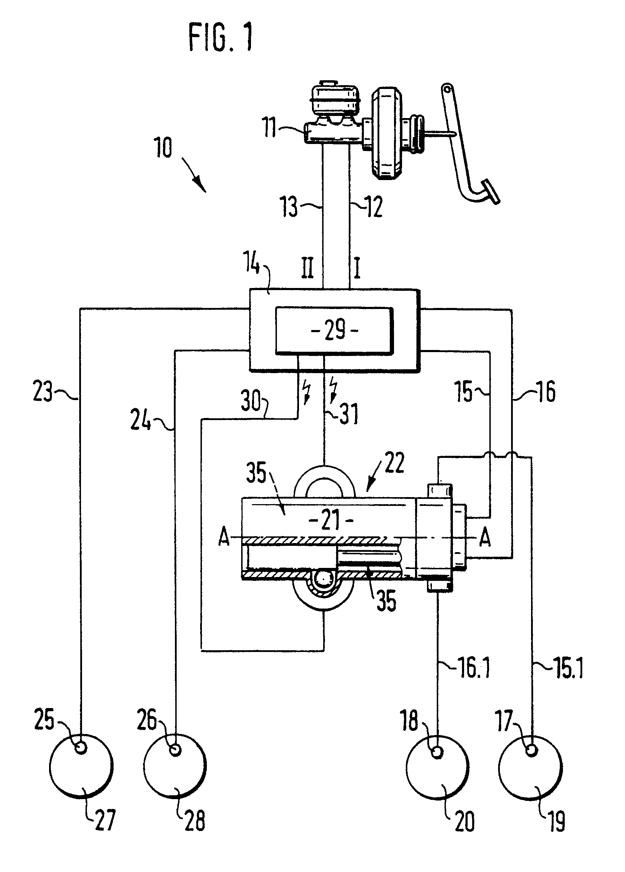

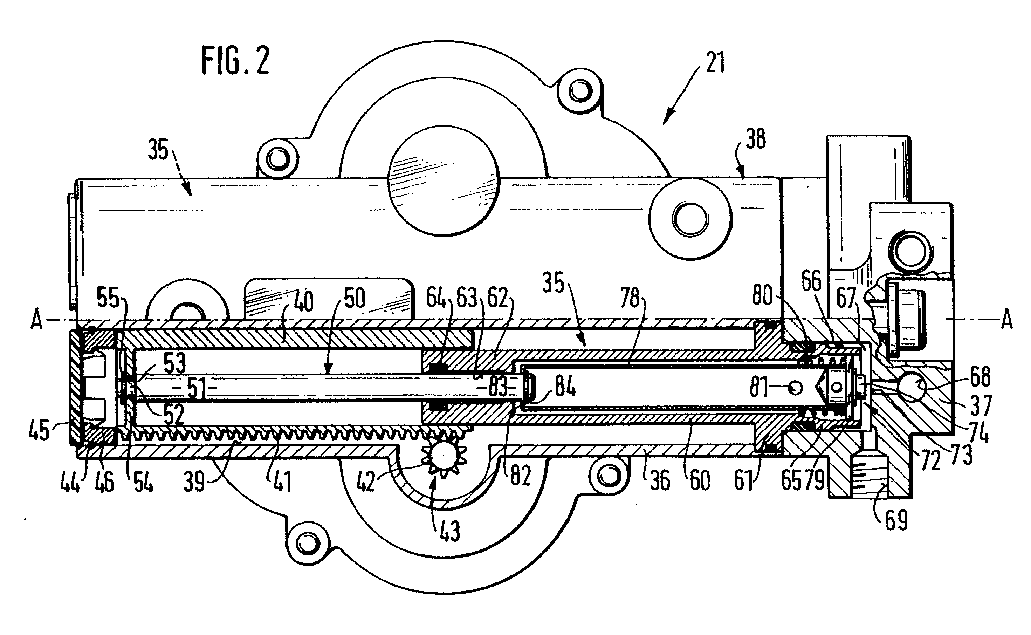

Ein Ausführungsbeispiel der Erfindung ist in der Zeichnung vereinfacht dargestellt und in der nachfolgenden Beschreibung näher erläutert. Es zeigen Fig. 1 schematisch eine hydraulische Fahrzeug-Bremsanlage mit einer Druckerzeugereinheit und Fig. 2 einen Längsschnitt durch einen Druckerzeuger der Einheit im größeren Maßstab als in der Fig. 1.

Beschreibung des Ausführungsbeispiels

Das in Fig. 1 dargestellte Schema einer hydraulischen Fahrzeug-Bremsanlage 10 zeigt einen pedalbetätigbaren Hauptbremszylinder 11 zum Erzeugen von Bremsdruck. An den Hauptbremszylinder 11 ist eine Hauptbremsleitung 12 für einen Bremskreis I und eine Hauptbremsleitung 13 für einen Bremskreis II angeschlossen. Die Hauptbremsleitungen 12 und 13 münden in ein Hydroaggregat 14 einer Blockierschutzeinrichtung. Im Bremskreis I führen vom Hydroaggregat 14 Radbremsleitungen 15 und 15.1 sowie 16 und 16.1 zu Radbremszylindern 17 und 18 der Radbremsen 19 und 20 angetriebener Räder einer ersten Fahrzeugachse. Zwischen den Radbremsleitungen 15 und 15.1 sowie 16 und 16.1 liegt eine Druckerzeugereinheit 21 einer Einrichtung 22 zur Begrenzung von Antriebsschlupf der Räder der ersten Fahrzeugachse. Die Druckerzeugereinheit 21 ist später ausführlich beschrieben. Im Bremskreis II sind Radbremsleitungen 23 und 24 an das Hydroaggregat 14 angeschlossen. Die Radbremsleitungen 23 und 24 führen zu Radbremszylindern 25 und 26 der Radbremsen 27 und 28 nicht angetriebener Räder einer zweiten Fahrzeugachse. Außerdem ist ein elektronisches Steuergerät 29 zum Überwachen des Raddrehverhaltens sowie zum Ansteuern des Hydroaggregats 14 zum Zwecke des Blockierschutzes beim Bremsen oder der Druckerzeugereinheit 21 zur Begrenzung von Antriebsschlupf beim Anfahren und Beschleunigen des Fahrzeugs vorgesehen. Dabei werden im Hydroaggregat 14 im einzelnen nicht dargestellte Magnetventile und eine Rückförderpumpe geschaltet, um bei Blockiergefahr wenigstens eines Rades den Bremsdruck im entsprechenden Radbremszylinder zu senken, zu halten oder zu erhöhen. Beim Auftreten von Antriebsschlupf wenigstens eines der angetriebenen Räder schaltet das Steuergerät 29 über Leitungen 30 und 31 die Druckerzeugereinheit 21 ein, um Bremsdruck in den entsprechenden Radbremszylinder einzusteuern und die Drehzahl der angetriebenen Räder zu sychronisieren.

Die Druckerzeugereinheit 21 weist je einen dem jeweiligen Radbremszylinder 17 bzw. 18 zugeordneten Druckerzeuger 35 auf. Da die Druckerzeuger 35 baugleich ausgebildet und symetrisch zu einer Achse A-A angeordnet sind, ist in der Fig. 2 die detaillierte Darstellung und die nachfolgende Beschreibung auf den an die Radbremsleitungen 16 und 16.1 angeschlossenen Druckerzeuger beschränkt.

Der Druckerzeuger 35 hat ein im wesentlichen aus einem Gehäuseteil 36 und einem Anschlußkopf 37 bestehendes Gehäuse 38. Der Gehäuseteil 36 weist eine zylindrische Bohrung 39 auf, in der ein Hohlzylinder 40 passend längsgeführt ist. Der Hohlzylinder 40 ist außen mit einer zahnstangenförmigen Verzahnung 41 für den Angriff eines Ritzels 42 eines motorischen Antriebs 43 vorsehen. An ihrem vom Anschlußkopf 37 abgewandten Ende ist die Bohrung 39 des Gehäuseteils 36 durch eine eingefügte, mit einem Sprengring 44 gehaltene und durch einen Deckel 45 verschlossene Anschlaghülse 46 begrenzt.

Ein als Stangenkolben ausgebildeter Kolben 50 des Druckerzeugers 35 ist im wesentlichen innerhalb des Hohlzylinders 40 angeordnet. An seinem in der Zeichnung links befindlichen Ende 51 ist der Kolben 50 mit einem Zapfen 52 ausgestattet, der durch eine Bohrung 53 in einem Boden 54 des Hohlzylinders 40 mit radialem Spiel greift. Zur Aufnahme axialer Kräfte ist der Kolben 50 mit einem auf den Zapfen 52 gesteckten Sicherungsring 55 am Hohlzylinder 40 gehalten.

In der Bohrung 39 des Gehäuseteils 36 befindet sich außerdem ein mit dem Kolben 50 zusammenwirkender Zylinder 60. Dieser ist durch einen angeformten Flansch 61 zwischen dem Gehäuseteil 36 und dem Anschlußkopf 37 des Druckerzeugergehäuses 38 gehalten. Der sich ebenso wie der Hohlzylinder 40 und der Kolben 50 gleichachsig zur Bohrung 39 erstreckende Zylinder 60 hat einen Boden 62 mit einer Bohrung 63, welche eine Lippendichtung 64 aufnimmt und vom Kolben 50 flüssigkeitsdicht durchgriffen ist.

Mit seinem rechts des Flansches 61 liegenden Endabschnitt 65 greift der Zylinder 60 flüssigkeitsdicht in einen von einer Bohrung 66 des Anschlußkopfes 37 gebildeten Raum 67 ein. An diesen ist eine über die Radbremsleitung 16 zum Hauptbremszylinder 11 der Fahrzeug-Bremsanlage 10 führende Leitungsverbindung 68 sowie eine durch die Radbremsleitung 16.1 zum Radbremszylinder 18 führende Leitungsverbindung 69 angeschlossen. Im Raum 67 des Anschlußkopfes 37 befindet sich ein Sitzventil 72 mit einem vom Anschlußkopf 37 gebildeten Ventilsitz 73 und einem vom Kolben 50 betätigbaren Schließglied 74. Mittels des Sitzventiles 72 ist der Innenraum des Zylinders 60 an den Druckweg zwischen dem Hauptbremszylinder 11 und dem Radbremszylinder 18 angeschlossen.

Innerhalb des Zylinders 60 befindet sich ein als Rohr ausgebildetes Betätigungsglied 78 für das Sitzventil 72. Das Betätigungsglied 78 trägt ventilseitig einen als Vierkant ausgebildeten Teller 79, an dem das Ventilschließglied 74 befestigt ist. An der ventilabgewandten Seite des Tellers 79 greift eine Schraubendruckfeder 80 an, welche gleichachsig zum Betätigungsglied 78 angeordnet und am Zylinder 60 abgestützt ist. Ventilseitig ist das Betätigungsglied 78 außerdem mit Öffnungen 81 versehen. Das vom Zylinder 60 gleichachsig aufgenommene Betätigungsglied 78 ist an seinem vom Ventil 72 abgewandten Ende mit einem einwärtsgerichteten Bund 82 versehen, durch den der Kolben 50 mit seinem zylinderseitigen Endabschnitt 83 greift. Innerhalb des Betätigungsgliedes 78 trägt der Kolben 50 einen Sprengring 84 für den Angriff am Bund 82.

In der in Fig. 2 gezeichneten Ausgangsstellung des vom Hohlzylinder 40 nahezu in voller Länge übergriffenen Kolbens 50 ist das Sitzventil 72 durch den Angriff des Kolbens am Betätigungsglied 78 geöffnet. Ein vom Fahrer erzeugter Bremsdruck wird daher im Radbremszylinder 18 wirksam. Ebenso kann in dieser Ausgangsstellung das Hydroaggregat 14 zum Zwecke des Blockierschutzes den Bremsdruck im Radbremszylinder 18 beeinflussen. Beim Auftreten von Antriebsschlupf am der Radbremse 20 zugeordneten Fahrzeugrad schaltet dagegen das Steuergerät 29 den Antrieb 43 des Druckerzeugers 35 ein. Das Ritzel 42 verschiebt nun den Hohlzylinder 40 mit dem Kolben 50 in Richtung auf den Anschlußkopf 37. Dabei folgt das Betätigungsglied 78 unter der Wirkung der Schraubendruckfeder 80 der Bewegung des Kolbens 50, so daß das Sitzventil 72 den Druckweg zum Hauptbremszylinder 11 schließt. Im weiteren Verlauf der Kolbenbewegung wird im Zylinder 60, im Betätigungsglied 78 und im Raum 67 befindliche Bremsflüssigkeit durch die Leitungsverbindung 69 ausgestoßen und im Radbremszylinder 18 Bremsdruck aufgebaut. Die Kolbenbewegung wird mit dem Erreichen synchronen Drehverhaltens der angetriebenen Fahrzeugräder beendet. Am Ende des Beschleunigungsvorganges wird der Kolben 50 in seine Ausgangsstellung zurückgeführt, in welcher er durch Angriff des Sprengrings 84 am Bund 82 des Betätigungsgliedes 78 das Sitzventil 72 öffnet.

ches längsverschiebbar im Zylinder (60) geführt ist und endseitig einen Teller (79) mit dem Ventilschließglied (74) trägt.

## Ansprüche

1. Druckerzeuger (35) für eine hydraulische Fahrzeug-Bremsanlage (10) mit einer Einrichtung (22) zur Antriebsschlupfbegrenzung, mit den Merkmalen:

a) ein Zylinder (60) ist für die Aufnahme und den Ausstoß von Bremsflüssigkeit mittels eines angetriebenen Kolbens (50) vorgesehen,

b) der Zylinder (60) ist mittels eines in Abhängigkeit von der Bewegung des Kolbens (50) betätigten Ventiles (72) an einen Druckweg zwischen einem Hauptbremszylinder (11) und einem Radbremszylinder (18) angeschlossen,

gekennzeichnet durch die weiteren Merkmale:

c) der Kolben (50) ist als Stangenkolben ausgebildet,

d) der Kolben (50) ist an seinem aus dem Zylinder (60) ragenden Ende (51) wenigstens mittelbar mit einem gleichachsig verlaufenden Hohlzylinder (40) verbunden, welcher den Kolben und den Zylinder (60) wenigstens teilweise umhüllt,

e) der Hohlzylinder (40) ist längsgeführt und außen mit einer zahnstangenförmigen Verzahnung (41) für den Angriff eines motorischen Antriebs (43) versehen.

2. Druckerzeuger nach Anspruch 1, dadurch gekennzeichnet, daß der Zylinder (60) mit seinem außerhalb des vom Hohlzylinder (40) übergriffenen Bereichs liegenden Endabschnitt (65) an einem Gehäuse (38) des Druckerzeugers (35) befestigt und der Kolben (50) mit radialem Spiel am Hohlzylinder (40) gelagert ist.

3. Druckerzeuger nach Anspruch 1 oder 2, dadurch gekennzeichnet, daß der Kolben (50) mit einem Zapfen (52) einen Boden (54) des Hohlzylinders (40) durchgreift und auf dessen freier Seite mit einem Sicherungsring (55) axial gehalten ist.

4. Druckerzeuger nach Anspruch 1, dadurch gekennzeichnet, daß der Kolben (50) in seiner Ausgangsstellung mit seinem zylinderseitigen Endabschitt (83) wenigstens mittelbar formschlüssig an einem den Zylinder (60) axial durchdringenden Betätigungsglied (78) anzugreifen vermag, welches ein Schließglied (74) des Ventils (72) aufweist, das entgegen Federkraft von einem gehäuseseitigen Ventilsitz (73) abhebbar ist.

5. Druckerzeuger nach Anspruch 4, dadurch gekennzeichnet, daß der Kolben (50) in das als Rohr ausgebildete Betätigungsglied (78) eingreift, wel-

# FIG. 1

FIG.2

**Europäisches Patentamt**

**EUROPÄISCHER RECHERCHENBERICHT**

Nummer der Anmeldung

**EP 90 11 3536**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | DE-C-3 236 366   (KUGELFISCHER GEORG SCHÄFER)<br>* Spalte 4, Zeilen 4 - 44; Figur *<br>– – – | 1 | B 60 T 8/32 |
| A | EP-A-0 263 595   (GENERAL MOTORS)<br>* Spalte 2, Zeile 24 - Spalte 4, Zeile 11; Figuren 1, 2 *<br>– – – | 1 | |
| A | DE-A-3 838 389   (GENERAL MOTORS)<br>* Spalte 6, Zeile 60 - Spalte 7, Zeile 68; Figuren 3A, 3B *<br>– – – | 1 | |
| A | DE-A-2 208 936   (TELDIX)<br>* Seite 9, letzter Absatz - Seite 10, Absatz 1; Figuren 3, 4 *<br>– – – | 1 | |
| A | PATENT ABSTRACTS OF JAPAN vol. 12, no. 464<br>(M-771)(3311) 06 Dezember 1988,<br>& JP-A-63 188557 (MAZDA) 04 August 1988,<br>* das ganze Dokument *<br>– – – | 1 | |
| A | FR-A-2 608 116   (AKEBONO)<br>* Seite 10, Zeile 12 - Seite 12, Zeile 21; Figuren 1, 2 *<br>– – – – – | 1 | |

| RECHERCHIERTE SACHGEBIETE (Int. Cl.5) |
|---|
| B 60 T |

Der vorliegende Recherchenbericht wurde für alle Patentansprüche erstellt

| Recherchenort | Abschlußdatum der Recherche | Prüfer |
|---|---|---|
| Den Haag | 27 November 90 | MEIJS P.C.J. |